# EUROPÄISCHE PATENTSCHRIFT

(11) **EP 2 016 106 B1**
(45) Veröffentlichungstag und Bekanntmachung des Hinweises auf die Patenterteilung: **22.06.2011**
(21) Anmeldenummer: 07728546.8
(22) Anmeldetag: 26.04.2007
(51) Int. Cl.: C08F 220/06, C08F 220/58, C08F 230/02, C08F 2/38, C02F 5/12, C09K 8/528

(54) **COPOLYMERE ALS SCALE-INHIBITOREN**
COPOLYMERS AS SCALE INHIBITORS
COPOLYMÈRES UTILISÉS EN TANT QU'INHIBITEURS DE TARTRE

(30) Priorität: 02.05.2006 EP 06113377
(43) Veröffentlichungstag der Anmeldung: 21.01.2009
(73) Patentinhaber: BASF SE, 67056 Ludwigshafen (DE)
(72) Erfinder: GUZMANN, Marcus, 69242 Mühlhausen (DE); STÖSSER, Michael, 67141 Neuhofen (DE); PAKUSCH, Joachim Dr., 67346 Speyer (DE); MIJOLVIC, Darijo Dr., 68309 Mannheim (DE); LÖFFLER, Achim Dr., 67346 Speyer (DE); RITTIG, Frank Dr., 68163 Mannheim (DE)
(86) Internationale Anmeldenummer: PCT/EP2007/054091
(87) Internationale Veröffentlichungsnummer: WO 2007/125073

(56) Entgegenhaltungen:
- EP-A- 1 577 372
- DATABASE WPI Week 200643 Derwent Publications Ltd., London, GB; AN 2006-418546 XP002438399 & JP 2006 152056 A (KANSAI PAINT CO LTD) 15. Juni 2006 (2006-06-15)
- MOHAMED, MOHAMED MOKHTAR ET AL: "Catalytic polymerization of N,N-diethanol acrylamide with phthalic anhydride in the presence of H-mordenite and Fe-mordenite zeolites" JOURNAL OF MOLECULAR CATALYSIS A: CHEMICAL , 211(1-2), 199-208 CODEN: JMCCF2; ISSN: 1381-1169, 2004, XP002437753

## Beschreibung

Um die Abscheidung von schwerlöslichen Erdalkalimetallsalzen aus wässrigen Systemen zu verringern oder vollständig zu verhindern, greift man auf sogenannte Scale-Inhibitoren zurück. Diese kommen auf unterschiedlichen technischen Gebieten zum Einsatz, wie zum Beispiel in Boilern für die Dampferzeugung, bei der destillativen Entsalzung von Meerwasser, bei der Eindampfung von Zuckersaft, bei Wasch- und Reinigungsprozessen, bei der umgekehrten Osmose sowie bei der Öl- und Gasgewinnung beziehungsweise dem Transport. Bei der zuletzt genannten Anwendung können sich beispielsweise aus dem Produktionswasser schwerlösliche anorganische Salze wie zum Beispiel Calciumcarbonat, Calciumsulfat, Bariumsulfat und Strontiumsulfat abscheiden und sich damit innerhalb der Fördereinrichtungen störende Ablagerungen bilden, die sogar zum Stillstand der Produktion führen können. Dies gilt auch für den Transport des produzierten Wassers, das vom geförderten Öl und/oder Gas abgetrennt wurde. Die Entstehung derartiger Ablagerungen beruht auf Änderungen der Löslichkeitsparameter wie Temperatur und Druck während der Förderung und dem Transport oder zum Beispiel auch durch Vermischen von Erdalkalimetallionen enthaltendem Formationswasser mit einem sulfationenreichen Meerwasser in der Formation oder innerhalb der Fördereinrichtungen. Ablagerungen innerhalb der Formation beeinträchtigen die Permeabilität der Lagerstätte und vermindern hierdurch die Produktivität von Öl und Gas.

Als Scale-Inhibitoren finden beispielsweise Polyacrylsäure, Polymaleinsäure oder hydrolysierte wasserlösliche Copolymerisate aus Maleinsäureanhydrid und beispielsweise C₂-C₁₂-Olefine Verwendung.

Bei der Öl- und Gasförderung kann man beispielsweise den in Wasser gelösten Scale-Inhibitor in einer Injektions- oder Produktionsbohrung oder direkt in die Förderleitung mittels einer Sonde in den Unterteil der Produktionsbohrung oder gegebenenfalls zu einem späteren Zeitpunkt innerhalb des Produktionsprozesses injizieren. Hier werden üblicherweise Polycarboxylate oder Oligo-/Polyphosphate eingesetzt. Falls die Scale-Ablagerungen in der Lagerstätte im Zuflussbereich der Produktionssonde auftreten, können diese nur durch eine Squeeze-Behandlung mit einem geeigneten Scale-Inhibitor verhindert werden. Bei einer Squeeze-Behandlung wird der gelöste Scale-Inhibitor im Überschuss praktisch als Vorrat direkt in die Formation eingebracht bzw. eingepresst, um sich auf dem Formationsgestein abzulagern. Während der Förderung löst sich der Inhibitor kontinuierlich vom Formationsgestein ab. Der Gehalt an Scale-Inhibitor in Wasser, das beispielsweise zusammen mit Öl aus der Lagerstätte gefördert wird, wird in bestimmten Zeitabständen überprüft. Erst bei einer Unterschreitung einer kritischen Konzentration an Scale-Inhibitor wird eine erneute Squeeze-Behandlung durchgeführt. Hierbei ist es wichtig, die Komponentenzusammensetzung des Produktionswassers regelmäßig zu bestimmen.

Aus der US-A 4,018,702 ist die Verwendung von Umsetzungsprodukten aus Polymaleinsäureanhydrid und Aminogruppen enthaltenden Verbindungen zur Verminderung der vorstehend beschriebenen Ablagerungen bekannt. Geeignete Umsetzungsprodukte sind beispielsweise die Adukte von Iminodiacetat an Polymaleinsäureanhydrid sowie die Additionsprodukte von Diethanolamin oder Ethanolamin an Polymaleinsäureanhydrid. Die Wirksamkeit solcher Produkte bei der Scale-Inhibierung ist jedoch verbesserungsbedürftig.

Die EP 0 887 316 A1 offenbart die Verwendung von Copolymeren beispielsweise aus Acrylsäure und einem substituierten Acrylamid, sowie deren Verwendung als Scale-Inhibitor.

Aus der Druckschrift US-A 3,880,765 ist die Verwendung von Kammpolymeren, welche entweder durch polymeranaloge alkalisch initiierte Ethoxylierung eines Acrylsäure-Homo- oder Copolymers oder durch Copolymerisation von Acrylsäure-Ethoxylaten mit Acrylsäure hergestellt sind, zur Verhinderung von Ablagerungen in Rohrleitungen, bekannt.

Die europäische Offenlegungsschrift EP 1 577 372 A1 beschreibt die Verwendung von Kammpolymeren mit monosubstituierten Acrylamid-Ethoxylat-Einheiten zur Herstellung von Dispergiermitteln aus der Gruppe der Polycarboxylate für die Herstellung von wässrigen Dispersionen von Partikeln.

Die Druckschrift US-A 4,430,481 beschreibt die Herstellung von Copolymeren aus - Acrylamid und Acrylamid-Diaceton, sowie deren polymeranaloge Ethoxylierung.

WO-A 97/16464 beschreibt die Verwendung von Polycarbonsäurehalbamiden als Scale-Inhibitoren.

EP-B 0 479 465 beschreibt die Hemmung der Abscheidung von Bariumkesselstein durch Zugabe von Phosphonaten.

Wie vorstehend erwähnt, finden Scale-Inhibitoren für unterschiedlichste Systeme Anwendung. Diesen ist jedoch allen gemein, dass die Abscheidung insbesondere schwerlöslicher Erdalkalimetallsalze vermieden werden soll. In diesem Zusammenhang wird häufig auch der Begriff Kesselstein verwendet. Hierbei ist insbesondere die Ausfällung von Sulfaten und/oder Carbonaten der Erdalkalimetalle Calcium, Barium und Strontium (Ca-/Ba-/Sr-Kesselstein) als problematisch anzusehen.

Trotz zahlreicher Scale-Inhibitoren, die im Stand der Technik bekannt sind, besteht nach wie vor ein Bedarf an verbesserten Scale-Inhibitoren, die zur Verringerung von Ca-/Ba-/Sr-Kesselsteinablagerungen dienen können.

Eine Aufgabe der vorliegenden Erfindung liegt somit darin, Copolymere mit verbesserten Eigenschaften für die Verringerung von Ca-/Ba-/Sr-Kesselstein zur Verfügung zu stellen.

Diese Aufgabe wird gelöst durch Copolymere, welche erhältlich sind aus der radikalischen Copolymerisation von zumindest
(a) einer monoethylenisch ungesättigten Carbonsäure mit 3 bis 6 C-Atomen oder deren Anhydrid
   mit
(b) einem Reaktionsgemisch enthaltend zumindest eine Komponente der allgemeinen Strukturformel 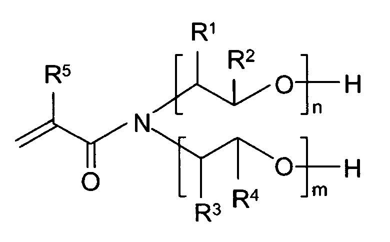
wobei R¹, R², R³, R⁴ unabhängig voneinander H oder C₁ bis C₄-Alkyl, wie beispielsweise Methyl, Ethyl, Isopropyl, n-Butyl oder n-Propyl sind.

Die Indizes n und m geben die Anzahl der Wiederholungseinheiten an und stehen in der Regel unabhängig voneinander für eine ganze Zahl im Bereich von 5 bis 50. R⁵ bedeutet im Rahmen der vorliegenden Erfindung H oder Methyl.

Es stellte sich nämlich im Rahmen von Untersuchungen überraschend heraus, dass das oben beschriebene Copolymer bei der Vermeidung von Ca-/Ba-/Sr-Kesselstein hervorragende Eigenschaften aufweist.

Vorzugsweise findet als monoethylenisch ungesättigte Carbonsäure Acrylsäure, Methacrylsäure und/oder Maleinsäureanhydrid Verwendung.

Gemäß einer bevorzugten Ausführungsform der Erfindung ist die in dem Reaktionsgemisch (b) enthaltene Komponente der allgemeinen Strukturformel durch eine alkalisch initiierte Alkoxylierung von Acrylamid und/oder Methacrylamid hergestellt.

Das Molverhältnis von (a) zu (b) liegt vorzugsweise im Bereich von 1:1 bis 15:1. Weiterhin bevorzugt liegt das Verhältnis im Bereich von 2:1 bis 10:1.

Der K-Wert der erfindungsgemäßen Copolymere beträgt typischerweise 10 bis 100, vorzugsweise 20 bis 60, besonders bevorzugt 30 bis 50.

Die erfindungsgemäßen Copolymere sind erhältlich durch radikalische Copolymerisation von zumindest einer Komponente (a) und einer Komponente (b).

Darüber hinaus können jedoch noch weitere Komponenten bei der Copolymerisation in den erfindungsgemäßen Copolymeren eingesetzt werden.

Hierbei kann es sich beispielsweise um weitere monoethylenisch ungesättigte Carbonsäuren mit 3 bis 6 C-Atomen handeln. Darüber hinaus können weitere Reaktionsgemische analog zur Komponente (b) eingesetzt werden.

Es können jedoch auch Komponenten eingesetzt werden, die sich chemisch von den Komponenten (a) und (b) unterscheiden.

Es ist bevorzugt, dass die erfindungsgemäßen Polymere nur aus den Komponenten (a) und (b) aufgebaut sind.

Sofern mindestens eine weitere Komponente eingesetzt wird, ist bevorzugt, dass diese aus den nachfolgend aufgeführten Ausgangsstoffen C1 bis C7 ausgewählt ist. Ganz besonders bevorzugt wird bei der radikalischen Copolymerisation als weiteres Comonomer Vinlyphosphonsäure zur Herstellung der erfindungsgemäßen Copolymere eingesetzt. Die Einbringung von Phosphorgruppen dient in vorteilhafter Weise dazu, die erfindungsgemäßen Copolymere einfacher quantifizierbar und detektierbar zu machen. So ermöglicht die Einbringung von Phosphorgruppen einen einfachen Nachweis beispielsweise mit Hilfe des Molybdänblaunachweises.

Die erfindungsgemäßen Copolymere weisen vorzugsweise eine mittlere Molmasse M_{w} auf, die im Bereich von 200 bis 500.000 liegt. Vorzugsweise liegt M_{w} im Bereich von 1.000 bis 200.000, insbesondere bevorzugt im Bereich von 2.000 bis 100.000.

Die Erfindung betrifft ferner ein Verfahren zur Herstellung der erfindungsgemäßen Copolymere mittels radikalischer Copolymerisation, welches zumindest die Schritte umfasst:
i) Herstellung zumindest eines Reaktionsgemisches, enthaltend zumindest eine Komponente der oben angegebenen allgemeinen Strukturformel aus einer vorzugsweise alkalisch initiierten Alkoxylierung von Acrylamid und/oder Methacrylamid mittels zumindest eines Alkylenoxids, und
ii) Radikalische Copolymerisation des zumindest einem in Schritt i) erhaltenen Reaktionsgemisches mit zumindest einer monoethylenisch ungesättigten Carbonsäure mit 3 bis 6 C-Atomen oder deren Anhydrid.

Die Herstellung des zumindest einen Reaktionsgemisches aus einer alkalisch initiierten Alkoxylierung von Acrylamid und/oder Methacrylamid mittels eines Alkylenoxids, kann auf aus dem Stand der Technik bekannte Weise erfolgen.

Gemäß einer bevorzugten Ausführungsform der Erfindung wird Verfahrensschritt i) in Gegenwart eines basischen Katalysators durchgeführt.

Zu diesem Zwecke werden die Ausgangssubstanzen in einem geeigneten Lösungsmittel gelöst und unter Zugabe eines Stabilisators mit einem Katalysator, vorzugsweise Kalium-tert.-butylat, versetzt und pro Mol NH-Funktion mit Alkylenoxid umgesetzt.

Als Alkylenoxide finden insbesondere Ethylenoxid, Propylenoxid, Butylenoxid oder eine Mischung der vorstehend genannten Alkylenoxide Verwendung.

Als besonders bevorzugte Reaktionstemperaturbedingungen erweisen sich dabei Bereiche zwischen 75°C und 85°C, unter einem Druck von bis zu etwa 10 bar.

Eine von diesem Verfahren spezielle Vorgehensweise zur Herstellung der Reaktionsprodukte aus einer alkalisch initiierten Alkoxylierung von (Meth)Acrylamid besteht darin, zunächst in einem vorgeschalteten Schritt nur eine Analkoxylierung des Acrylamids und/oder Methacrylamids vorzunehmen.

Zum Zwecke der Analkoxylierung wird das Acrylamid und/oder Methacrylamid nur mit einer Teilmenge des insgesamt eingesetzten Ethylenoxids, die etwa 1 mol Ethylenoxid pro mol NH-Gruppierung entspricht, oder, wenn das Polyalkylenimin zunächst mit bis zu 2 mol Propylenoxid oder Butylenoxid pro mol NH-Gruppierung modifiziert werden soll, auch hier zunächst nur mit bis zu 1 mol dieses Alkylenoxids umsetzt.

Diese Umsetzung wird in der Regel in Abwesenheit eines Katalysators bei 50 bis 120°C, vorzugsweise bei 75 bis 85°C, unter einem Druck von bis zu 10 bar, insbesondere bis zu 8 bar, vorgenommen.

In einem anschließenden zweiten Schritt erfolgt dann die weitere Alkoxylierung durch aufeinander folgende Umsetzung mit der restlichen Menge Alkylenoxid.

Die Alkoxylierung wird bevorzugt in Gegenwart eines basischen Katalysators vorgenommen. Der basische Katalysator in Verfahrensschritt i) ist hierbei bevorzugt ausgewählt aus der Gruppe bestehend aus Alkali- und Erdalkalimetallhydroxiden, wie Natriumhydroxid, Kaliumhydroxid und Calciumhydroxid, Alkalimetallalkoholaten, insbesondere Natrium- und Kalium-C₁-C₄-Alkoholaten, wie Natriummethylat, Natriumethylat und Kalium-tert.-butylat, Alkali- und Erdalkalimetallhydriden, wie Natriumhydrid und Calciumhydrid, und Alkalimetallcarbonaten, wie Natriumcarbonat und Kaliumcarbonat. Bevorzugt sind dabei die Alkalimetallhydroxide und die Alkalimetallalkoholate, wobei Kaliumhydroxid und Natriumhydroxid besonders bevorzugt sind.

Gemäß einer bevorzugten Ausführungsform des Verfahrens wird der basische Katalysator in Verfahrensschritt i) in einer Menge von 0,05 bis 10 Gew.-%, besonders bevorzugt in einer Menge von 0,5 bis 2 Gew.-%, bezogen auf die Gesamtmenge Acrylamid und/oder Methacrylamid und Alkylenoxid eingesetzt.

Eine weitere Alkoxylierung kann in Substanz oder in einem organischen Lösungsmittel vorgenommen werden.

Die im Folgenden beispielhaft angegebenen Verfahrensbedingungen können für die Ethoxylierung verwendet werden, diese sind auf die Alkoxylierungen übertragbar.

Unter Verwendung basischer Katalysatoren, wie zum Beispiel Natrium- oder Kaliumhydroxid wird das analkoxylierte Acrylamid und/oder Methacrylamid nach Zugabe des Katalysators zur Bildung des Alkoholates entwässert. Dies kann in einfacher Weise unter vermindertem Druck von 0,01 bis 0,5 bar geschehen. Die anschließende Umsetzung mit dem Alkylenoxid erfolgt üblicherweise bei Temperaturen von 50 bis 120°C, vorzugsweise bei 75 bis 85 °C, unter einem Druck von bis zu 10 bar, insbesondere von bis zu 8 bar, wobei jeweils eine Nachrührzeit von etwa 0,5 bis 6 Stunden bei einer Temperatur von etwa 75 bis 85°C sowie Druckkonstanz angeschlossen wird.

Als Reaktionsmedien für beide vorstehend beschriebenen Verfahren eignen sich insbesondere unpolare aprotische organische Lösungsmittel. Als Beispiele für besonders geeignete unpolare aprotische Lösungsmittel seien aliphatische und aromatische Kohlenwasserstoffe, wie Hexan, Cyclohexan, Toluol und Xylole genannt. Beispiele für besonders geeignete polare, aprotische Lösungsmittel sind Ether, insbesondere cyclische Ether, wie Tetrahydrofuran und Dioxan, N,N-Dialkylamide, wie Dimethylformamid und Dimethylacetamid, und N-Alkyllactame, wie N-Methylpyrrolidon. Weiterhin können auch Mischungen dieser aprotischen Lösungsmittel verwendet werden. Besonders bevorzugte Lösungsmittel für die vorstehend genannten Reaktionen sind Xylol und Toluol.

Neben den vorstehend genannten Ausgangsstoffen kann die im erfindungsgemäßen Verfahren zu polymerisierende Reaktionsmischung auch - wie bereits ausgeführt - weitere, von den vorgenannten Ausgangsstoffen verschiedene Stoffe enthalten. Hierzu zählen insbesondere die nachfolgend aufgeführten, monoethylenisch ungesättigten Ausgangsstoffe (Ausgangsstoffe C). Beispiele hierfür sind:

| | |
|---|---|
| C1 | monoethylenisch ungesättigte Mono- und Dicarbonsäuren mit 3 bis 8 C-Atomen wie Crotonsäure, Isocrotonsäure, Maleinsäure, Fumarsäure und Itaconsäure, |
| C2 | Alkylester monoethylenisch ungesättigter Mono- und Di-C₃-C₈-carbonsäuren, insbesondere der Acrylsäure und der Methacrylsäure mit C₁-C₁₀-Alkanolen oder C₃-C₁₀-Cycloalkanolen wie Methylacrylat, Ethylacrylat, n-Propylacrylat, iso-Propylacrylat, n-Butylacrylat, iso-Butylacrylat, tert.-Butylacryat, n-Hexylacrylat, 2-Ethylhexylacrylat, Cyclohexylacrylat und die entsprechenden Methacrylsäureester. |
| C3 | Hydroxyalkylester monoethylenisch ungesättigter Mono- und Di-C₃-C₈-carbonsäuren, insbesondere der Acrylsäure und der Methacrylsäure wie 2-Hydroxyethylacrylat, 3-Hydroxypropylacrylat, 4-Hydroxybutylacrylat, 2-Hydroxyethylmethacrylat, 3-Hydroxypropylmethacrylat und 4-Hydroxybutylmethacrylat, |
| C4 | monoethylenisch ungesättigte Nitrile wie Acrylnitril, |
| C5 | vinylaromatische Monomere wie Styrol und Vinyltoluole, |
| C6 | monoethylenisch ungesättigte Sulfonsäuren und Phosphorsäuren und deren Salze, insbesondere deren Alkalisalze wie Vinylsulfonsäure, Allylsulfonsäure, Methallylsulfonsäure,Styrolsulfonsäure, 2-Acryloxyethansulfonsäure, 2-Acrylamido-2-methylpropansulfonsäure, Vinylphosphonsäure, Allylphosphonsäure, 2-Acryloxethanphosphonsäure, 2-Acrylamido-2-methylpropanphosphonsäure, sowie |
| C7 | Aminogruppen tragende Monomere und deren Protonierungs- und deren Quaternierungsprodukte wie [2-(N,N-Dimethylamino)ethyl]acrylat, [2-(N,N-Dimethylamino)ethyl]methacrylat, [3-(N,N-Dimethylamino)propyl]acrylat, [2-(N,N-Dimethylamino)propyl]methacrylat, [2-(N,N,N-Trimethylammonium)-ethyl]acrylat, [2-(N,N,N-Trimethylammonium)ethyl]methacrylat, [3-(N,N,N-Trimethylammonium)propyl]acrylat, [2-N,N,N-Trimethylammonium)propyl]-methacrylat in Form ihrer Chloride, Sulfate und Methosulfate. |

Bevorzugte zusätzliche Ausgangsstoffe sind die Ausgangsstoffe C1, C3 und C6. Der Anteil monoethylenisch ungesättigter Monomere C1 an der Gesamtmenge des zu polymerisierenden Reaktionsgemisches wird in der Regel 30 Gew.-% und insbesondere 10 Gew.-% nicht überschreiten. Gemäß einer besonders bevorzugten Ausführungsform setzt man keine oder weniger als 1 Gew.-% C, bezogen auf die Gesamtmenge der zu polymerisierenden Ausgangsstoffe ein.

Zudem kann es zur Erhöhung des Molekulargewichts des Copolymerisats zweckmäßig sein, die Copolymerisation in Gegenwart von geringen Mengen an mehrfach ethylenisch ungesättigten Monomeren mit zum Beispiel 2, 3 oder 4 polymerisierbaren Doppelbindungen durchzuführen (Vernetzer). Beispiele hierfür sind Diester und Triester ethylenisch ungesättigter Carbonsäuren, insbesondere die Bis- und Trisacrylate von Diolen oder Polyolen mit 3 oder mehr OH-Gruppen, zum Beispiel die Bisacrylate und die Bismethacrylate von Ethylenglykol, Diethylenglykol, Triethylenglykol, Neopentylglykol oder Polyethylenglykolen. Derartige Vernetzer werden, sofern erwünscht, in einer Menge von in der Regel 0,01 bis 5 Gew.-% bezogen auf die Gesamtmenge der zu polymerisierenden Monomere eingesetzt. Vorzugsweise werden weniger als 0,01 Gew.-% und insbesondere keine Vernetzermonomere eingesetzt.

Die erfindungsgemäße radikalische Copolymerisation zumindest eines der in Verfahrensschritt i) erhaltenen Reaktionsgemische mit Acrylsäure und/oder Methacrylsäure und gegebenenfalls weiteren Ausgangsstoffen erfolgt üblicherweise in Gegenwart von Radikale bildenden Verbindungen, sogenannte Initiatoren. Derartige Verbindungen werden üblicherweise in Mengen bis zu 30 Gew.-%, vorzugsweise 0,05 bis 15 Gew.-%, insbesondere 0,2 bis 8 Gew.-%, bezogen auf die zu polymerisierenden Ausgangsstoffe eingesetzt. Bei aus mehreren Bestandteilen bestehenden Initiatoren (Initiatorsysteme z. B. RedoxInitiatorsystemen) beziehen sich die vorstehenden Gewichtsangaben auf die Summe der Komponenten.

Geeignete Initiatoren sind beispielsweise organische Peroxide und Hydroperoxide, weiterhin Peroxidisulfate, Percarbonate, Peroxidester, Wasserstoffperoxid und Azoverbindungen. Beispiele für solche Initiatoren sind Wasserstoffperoxid, Dicyclohexylperoxidicarbonat, Diacetylperoxid, Di-tert.-Butylperoxid, Diamylperoxid, Diactanoylperoxid, Didecanoylperoxid, Dilauroylperoxid, Dibenzoylperoxid, Bis(o-toluyl)peroxid, Succinylperoxid, Methylethylketonperoxid, Di-tert.-Butylhydroperoxid, Acetylacetonperoxid, Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylhydroperoxid, Cumolhydroperoxid, tert.-Amylperpivalat, tert.-Butoxi-2-ethylhexanoat und Diisopropylperoxidicarbamat; weiterhin Lithium-, Natrium-, Kalium- und Ammuniumperoxodisulfat, Azoinitiatoren 2,2'-Azobisisobutyronitril, 2,2'-Azobis(2-methylbutyronitril), 2,2'-Azobis[2-methyl-N-(-2hydroxyethyl)propionamid, 1,1'-Azobis(1-cyclohexancarbonitril), 2,2'-Azobis(2,4-dimethylvaleronitril), 2,2'-Azobis(N,N'-dimethylenisobutyroamidin)dihydrochlorid, und 2,2'-Azobis(2-amidinopropan)dihydrochlorid, sowie im folgenden erläutete Redoxinitiatorsysteme.

Redoxinitiatorsysteme enthalten mindestens eine peroxidhaltige Verbindung in Kombination mit einem Redox-Coinitiator, zum Beispiel eine reduzierend wirkende Schwefelverbindung, zum Beispiel Bisulfite, Sulfite, Thiosulfate, Dithionite und Tetrathionate von Alkalimetallen oder von Ammoniumverbindungen. So kann man Kombinationen von Peroxodisulfaten mit Alkalimetall- oder Ammoniumhydrogensulfiten einsetzen, zum Beispiel Ammoniumperoxodisulfat und Ammoniumdisulfit. Die Menge der peroxidhaltigen Verbindungen zum Redox-Coinitiator beträgt 30 : 1 bis 0,05 : 1.

Die Initiatoren können allein oder in Mischung untereinander angewendet werden, zum Beispiel Mischungen aus Wasserstoffperoxid und Natriumperoxodisulfat.

Die Initiatoren können sowohl wasserlöslich als auch in Wasser nicht, oder nur gering löslich sein. Für die radikalische Polymerisation in wässrigem Medium werden bevorzugt wasserlösliche Initiatoren eingesetzt, das heißt, Initiatoren, die in der zur Polymerisation üblicherweise eingesetzten Konzentration im wässrigen Polymerisationsmedium löslich sind. Hierzu zählen Peroxodisulfate, Azoinitiatoren mit ionischen Gruppen, organische Hydroperoxide mit bis zu 6 C-Atomen, Acetonhydroperoxid, Methylethylketonhydroperoxid und Wasserstoffperoxid, sowie die vorstehend genannten Redoxinitiatoren.

In Kombination mit den Initiatoren beziehungsweise mit den Redoxinitiatorsystemen können zusätzlich Übergangsmetallkatalysatoren eingesetzt werden, zum Beispiel Salze von Eisen, Kobalt, Nickel, Kupfer, Vanadium und Mangan. Geeignete Salze sind zum Beispiel Eisen(I)sulfat, Kobalt(II)chlorid, Nickel(II)sulfat, oder Kupfer(I)chlorid. Bezogen auf die Monomeren wird das reduzierend wirkende Übergangsmetallsalz in einer Konzentration von 0,1 ppm bis 1000 ppm eingesetzt. So kann man Kombinationen von Wasserstoffperoxid mit Eisen(II)Salzen einsetzen, wie beispielsweise 0,5 bis 30% Wasserstoffperoxid und 0,1 bis 500 ppm Mohrsches Salz.

Auch bei der erfindungsgemäßen radikalischen Copolymerisation in organischen Lösungsmitteln können in Kombination mit den oben genannten Initiatoren Redox-Coinitiatoren und/oder Übergangsmetallkatalysatoren mit verwendet werden, zum Beispiel Benzoin, Dimethylanilin, Ascorbinsäure sowie in organischen Lösungsmitteln lösliche Komplexe von Schwermetallen, wie Kupfer, Kobalt, Eisen, Mangan, Nickel und Chrom. Die üblicherweise verwendeten Mengen an Redox-Coinitiatoren beziehungsweise Übergangsmetallkatalysatoren betragen etwa 0,1 bis 1000 ppm, bezogen auf die eingesetzten Mengen an Monomeren.

Die radikalische Copolymerisation kann auch durch Einwirkung von ultravioletter Strahlung, gegebenenfalls in Gegenwart von UV-Initiatoren durchgeführt werden. Solche Initiatoren sind beispielsweise Verbindungen, wie Benzoin und Benzoinether, α-Methylbenzoin oder α-Phenylbenzoin. Auch so genannte Triplett-Sensibilisatoren, wie Benzyldiketale, können verwendet werden. Als UV-Strahlungsquellen dienen beispielsweise neben energiereichen UV-Lampen, wie Kohlebogenlampen, Quecksilberdampflampen oder Xenonlampen auch UV-arme Lichtquellen, wie Leuchtstoffröhren mit hohem Blauanteil.

Um das mittlere Molekulargewicht der radikalischen Polymerisation in Verfahrensschritt ii) zu kontrollieren, ist es oft zweckmäßig, die radikalische Copolymerisation in Gegenwart von Reglern durchzuführen. Hierzu können Regler verwendet werden, insbesondere organische SH-Gruppen enthaltende Verbindungen, insbesondere wasserlösliche SH-Gruppen enthaltende Verbindungen wie 2-Mecaptoethanol, 2-Mercaptopropanol, 3-Mercaptopropionsäure, Cystein, N-Acetylcystein, weiterhin Phosphor(III)- oder Phosphor(I)-Verbindungen wie Alkalimetall- oder Erdalkalimetallhypophosphite, zum Beispiel Natriumhypophosphit, sowie Hydrogensulfite wie Natriumhydrogensulfit. Die Polymerisationsregler werden im Allgemeinen in Mengen von 0,05 bis 10 Gew.-%, insbesondere 0,1 bis 2 Gew.-%, bezogen auf die Monomere eingesetzt. Bevorzugte Regler sind die vorgenannten SH-. Gruppen tragenden Verbindungen, insbesondere wasserlösliche SH-Gruppen tragende Verbindungen wie 2-Mercaptoethanol, 2-Mercaptopropanol, 3-Mercaptopropionsäure, Cystein und N-Acetylcystein. Bei diesen Verbindungen hat es sich bewährt, diese in einer Menge von 0,05 bis 2 Gew.-%, insbesondere 0,1 bis 1 Gew.-% bezogen auf die Monomere einzusetzen. Die vorgenannten Phosphor(III)- und Phosphor(I)-Verbindungen, sowie die Hydrogensulfite werden üblicherweise in größeren Mengen zum Beispiel 0,5 bis 10 Gew.-% und insbesondere 1 bis 8 Gew.-%, bezogen auf die zu polymerisierenden Monomere eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen oder allylischen H-Atomen zu einer Verringerung des mittleren Molekulargewichtes durch Kettenübertragung.

Gemäß einer weiteren Ausführungsform der Erfindung kann bei der radikalischen Polymerisation in Schritt ii) des erfindungsgemäßen Verfahrens als weiteres Comonomer Vinylphosphonsäure eingesetzt werden. Sowohl der Einbau von Phosphorgruppen bei der Verwendung von Hypophosphiten als Molekulargewichtsreglern als auch der Einbau von Phosphorgruppen durch Verwendung von Vinylphosphonsäure erleichtern den Nachweis und die Detektion der erfindungsgemäßen Copolymere. Als Nachweismethode ist in dem vorliegenden Fall insbesondere der Molybdänblaunachweis in Betracht zu ziehen.

In einer bevorzugten Ausführungsform erfolgt daher die radikalische Copolymerisation in Gegenwart eines auf einem Hypophosphit basierenden Reglers.

Die radikalische Copolymerisation der Komponenten der allgemeinen Strukturformel, insbesondere von Reaktionsprodukten der alkalisch initiierten Alkoxylierung von Acrylamid und/oder Methacrylamid mit Acrylsäure und/oder Methacrylsäure kann nach den üblichen Polymerisationsverfahren erfolgen, einschließlich Lösungs-, Fällungs-, Suspensions- oder Substanzpolymerisation. Bevorzugt ist die Methode der Lösungspolymerisation, das heißt die Polymerisation in Lösungs- oder Verdünnungsmitteln.

Zu den geeigneten Lösungs- oder Verdünnungsmitteln zählen sowohl aprotische Lösungsmittel, wie zum Beispiel Aromate wie Toluol, o-Xylol, p-Xylol, Cumol, Chlorbenzol, Ethylbenzol, technischen Mischungen von Alkylaromaten, Aliphaten und Cycloaliphaten wie Cyclohexan und technischen Aliphatenmischungen, Ketone, wie Aceton, Cyclohexanon und Methylethylketon, Ether wie Tetrahydrofuran, Dioxan, Diethylether, tert.-Butylmethylether, und C₁-C₄-Alkylester aliphatischer C₁-C₄-Carbonsäuren wie Essigsäuremethylester und Essigsäureethylester, weiterhin protische Lösungsmittel wie Glykole und Glykolderivate, Polyalkylenglykole und deren Derivate, C₁-C₄-Alkanole, z.B. n-Propanol, n-Butanol, Isopropanol, Ethanol oder Methanol, sowie Wasser und Mischungen von Wasser mit C₁-C₄-Alkanolen, wie zum Beispiel Isopropanol-Wasser-Mischungen. Vorzugsweise erfolgt das erfindungsgemäße radikalische Copolymerisationsverfahren in Wasser zu einer Mischung aus Wasser mit bis zu 60 Gew.-% an C₁-C₄-Alkanolen oder Glykolen als Lösungs- oder Verdünnungsmittel. Besonders bevorzugt wird Wasser als alleiniges Lösungsmittel eingesetzt.

Das radikalische Copolymerisationsverfahren wird bevorzugt unter weitgehendem oder vollständigem Ausschluss von Sauerstoff, vorzugsweise in einem Inertgasstrom, zum Beispiel einem Stickstoffstrom durchgeführt.

Das erfindungsgemäße Verfahren kann in den für Polymerisationsmethoden üblichen Apparaturen durchgeführt werden. Hierzu zählen Rührkessel, Rührkesselkaskaden, Autoklaven, Rohrreaktoren und Kneter. Die radikalische Copolymerisation wird beispielsweise in Rührkesseln durchgeführt, die mit einem Anker-, Blatt-, Impeller- oder Mehrstufenimpulsgegenstromrührer ausgestattet sind. Besonders geeignet sind Apparaturen, die im Anschluss an die Polymerisation die direkte Isolierung des Festprodukts gestatten, wie z. B. Schaufeltrockner. Die erhaltenen Polymerisat-Suspensionen können direkt in Verdampfern, wie beispielsweise Bandtrocknern, Schaufeltrocknern, Sprühtrocknern oder Wirbelbetttrocknern getrocknet werden. Man kann aber auch durch Filtrieren oder Zentrifugieren die Hauptmenge des inerten Lösungsmittels abtrennen und gegebenenfalls durch Nachwaschen mit frischem Lösungsmittel Reste von Initiatoren, Monomeren und Schutzkolloiden - sofern vorhanden - entfernen und die Copolymere erst danach trocknen.

Die radikalische Copolymerisation erfolgt üblicherweise bei Temperaturen im Bereich von 0°C bis 300°C, vorzugsweise im Bereich von 40 bis 120°C. Die Polymerisationsdauer liegt üblicherweise im Bereich von 0,5 Stunden bis 15 Stunden und insbesondere im Bereich von 2 bis 6 Stunden. Der bei der radikalischen Copolymerisation herrschende Druck ist für den Erfolg der Polymerisation von untergeordneter Bedeutung und liegt in der Regel im Bereich von 800 mbar bis 2 bar und häufig bei Umgebungsdruck. Bei Einsatz leichtflüchtiger Lösungsmittel oder leichtflüchtiger Monomere kann der Druck auch höher sein.

Die mit Hilfe des erfindungsgemäßen Verfahrens erhaltenen Copolymere haben typischerweise K-Werte von 10 bis 100, vorzugsweise 20 bis 60. Die K-Werte der Copolymerisate können nach H. Fikentscher, Cellulose-Chemie, Band 13, 48-64 und 71-74 (1932) in wässriger Lösung bei einem pH-Wert von 8, einer Temperatur von 25°C und einer Polymerkonzentration des Natriumsalzes der Copolymerisate von 1 Gew.-% bestimmt werden.

Wird das erfindungsgemäße Verfahren als Lösungspolymerisation in Wasser durchgeführt, so ist für viele Anwendungszwecke eine Entfernung des Wassers nicht erforderlich. Im Übrigen kann eine Isolierung der erfindungsgemäß erhältlichen Copolymere in an sich üblicher Weise durchgeführt werden, zum Beispiel durch Sprühtrocknung des Polymerisationsgemisches. Wird die radikalische Copolymerisation in einem wasserdampfhaltigen Lösungsmittel oder Lösungsmittelgemisch durchgeführt, so ist es möglich, das Lösungsmittel durch Einleiten von Wasserdampf zu entfernen, wodurch eine wässrige Lösung oder Dispersion der Copolymerisate erhalten wird.

Bevorzugt werden die Copolymerisate der radikalischen Copolymerisation in Form einer wässrigen Dispersion oder Lösung gewonnen. Der Feststoffgehalt beträgt vorzugsweise 10 bis 80 Gew.-%, insbesondere 20 bis 65 Gew.-%.

Die mit dem erfindungsgemäßen Verfahren herstellbaren Copolymere eignen sich in ihrer Verwendung hervorragend als Scale-Inhibitor zur Vermeidung von Ca-/Ba-/Sr-Kesselstein, und dienen in diesem Zusammenhang insbesondere der Inhibierung der Ausfällung von Ca-/Ba-/Sr-Kesselstein. Ca-/Ba-/Sr-Kesselstein wird von zumindest einem der Salze Ba-SO₄, SrSO₄, BaCO₃ und SrCO₃ verursacht. Weiterhin können weitere schwerlösliche Salze der Erdalkalimetalle und gegebenenfalls Oxide anderer Metalle in der Flüssigkeit vorhanden sein. Solche Salze sind z. B. Calciumcarbonat, Calciumsulfat, Calciumsilikate, Magnesiumsilikate, Magnesiumhydroxid und Magnesiumcarbonat sowie beispielsweise Eisen(III)-oxid.

Im Rahmen der vorliegenden Erfindung liegt bereits dann eine Vermeidung bzw. Inhibierung von Ca-/Ba-/Sr-Kesselstein vor, wenn die Ausbildung einer Ausfällung von zumindest einem der Salze BaSO₄, SrSO₄, BaCO₃, SrCO₃ zumindest teilweise vermieden oder verzögert wird.

Die zu der Verhinderung von Ca-/Ba-/Sr-Kesselstein eingesetzten Copolymere können die Bildung von Kristallen der oben genannten Salze in einer Flüssigkeit, insbesondere in wasserführenden Systemen, verringern, verzögern oder verhindern. Zusätzlich oder alternativ dazu können diese auch die Bildung von Niederschlägen solcher Salze beeinflussen. Auf diese Weise wird die Flüssigkeitsumgebung, beispielsweise ein Kessel, eine Rohrleitung, ein Druckbehälter, aber auch eine Gesteinsformation oder Produktions- und/oder Injektionsbohrlöcher für die Erdöl- oder Erdgasförderung und Lagertanks oder Apparate in der Ölproduktion, von Ausfällungen frei gehalten. Ausfällungen bzw. Ablagerungen führen beispielsweise bei Rohrleitungen zu einer Querschnittsverringerung, wodurch die Durchflusskapazität reduziert wird. Außerdem kann durch das Verhindern/Reduzieren von Niederschlägen bzw. Belägen in besonders vorteilhafter Weise die Korrosionsneigung, insbesondere die Gefahr von Lochfraß- oder Spaltkorrosion, entscheidend verringert werden. Mit Hilfe des erfindungsgemäßen Polymers kann somit die Lebensdauer von Geräten oder Anlagen erhöht werden. Die Stillstandzeiten und Kosten zur Reinigung und Neuanschaffung von Anlagenteilen oder Geräten können hierdurch erheblich reduziert werden.

Daher sind die erfindungsgemäßen Copolymere besonders geeignet, wenn es sich bei der Flüssigkeit, in der die erfindungsgemäßen Copolymere zum Einsatz kommen, um eine solche handelt, die Wasser und/oder Erdöl und/oder Erdgas enthält. Insbesondere, wenn die Flüssigkeit Wasser darstellt.

Weiterhin bevorzugt dient die Flüssigkeitsumgebung, wie beispielsweise ein Kessel, eine Rohrleitung, ein Druckbehälter, eine Gesteinsformation oder ein Produktions- und/oder Injektionsbohrloch für die Erdöl- oder Erdgasförderung, zum Aufbewahren, Erhitzen oder Abkühlen, Transport, Fördern der Flüssigkeit oder als Lagerstätte der Flüssigkeit.

Die in der betreffenden Flüssigkeitsumgebung vorhandene Flüssigkeit enthält die Copolymere üblicherweise in unterstöchiometrischer Menge. Hierbei können Konzentrationen von bis zu etwa 1000 ppm üblich sein. Eine Mindestkonzentration der Copolymere liegt hier bei typischerweise bei 0,01 ppm, vorzugsweise bei 0,1 ppm, mehr bevorzugt bei 0,5 ppm, insbesondere 1 ppm, bezogen auf das Gewicht der Copolymere und der Flüssigkeit. Der bevorzugte Konzentrationsbereich der Copolymere in der betreffenden Flüssigkeitsumgebung liegt zwischen 1 und 100 ppm.

Neben den bereits oben aufgeführten Flüssigkeitsumgebungen sind auch Systeme in betracht zu ziehen, wie ein Kühlwassersystem, ein Dampferzeugungssystem, ein wässriges System eines Meerwasserverdampfers, ein wässriges System einer Umkehrosmose-Vorrichtung, ein wässriges System einer Flaschenwaschanlage, ein wässriges System von Anlagen in der Papierherstellung, ein wässriges System einer Verdampfungsvorrichtung zur Zuckerherstellung, ein Bodenbewässerungssystem, ein wässriges System eines hydrostatischen Kochers, ein wässriges System einer Gaswaschanlage, ein wässriges Heizungssystem mit geschlossenem Kreislauf, ein Kühlsystem auf Wassergrundlage oder ein unterirdisches Wasserbrunnensystem.

Die Temperaturen, bei denen das erfindungsgemäße Verfahren durchgeführt wird, variieren und sind durch die Temperatur im Bohrloch beziehungsweise in den Anlagen bestimmt. Die Temperatur kann hierbei zwischen 0°C bei oberirdischen Anlagenteilen bis 400°C liegen.

Ein weiterer Gegenstand der vorliegenden Erfindung ist die Verwendung der Copolymere als Scale-Inhibitor. Bevorzugte Anwendungen der erfindungsgemäß zu verwendenden Scale-Inhibitoren sind die Entsalzung von Meer- und Brackwasser durch Destillation oder Membranverfahren, sowie beispielsweise die umgekehrte Osmose oder Elektrodialyse. Eine weitere Anwendung der Belagsverhinderer ist zum Beispiel beim Eindampfen von Zuckersäften aus Rohr- und Rübenzucker gegeben. Eine weitere wichtige Verwendung als Scale-Inhibitoren ist bei der oben beschriebenen Öl- und Gasgewinnung sowie dem Transport gegeben.

Die Bestimmung der Konzentration der Copolymere in der Flüssigkeitsumgebung kann durch geeignete Probenahme und anschließender Konzentrationsbestimmung der Probe erfolgen. Insbesondere im Zusammenhang mit der Ölförderung kann die optimale Konzentration auch dadurch bestimmt werden, dass zunächst die Zusammensetzung von Formations- und/oder Injektionswasser ermittelt wird und so die optimale Anwendungskonzentration durch dem Fachmann nahe liegende Methoden ermittelt wird. Das Einhalten der so ermittelten Konzentration kann indirekt dadurch überprüft werden, dass eine konstante Förderrate vorliegt. Bei Abweichung der Förderrate kann dies auf eine Ca-/Ba-/Sr-Kesselsteinbildung zurückführbar sein.

Die Copolymere können beispielsweise am unteren Ende eines Bohrloches dosiert werden. Hierzu kann eine Sonde verwendet werden. Bevorzugt wird das Polymer zusammen mit dem Injektionswasser in die Gesteinsformation verpresst. Weiterhin bevorzugt wird das Polymer durch die Produktionsbohrung in eine Gesteinsformation verpresst (Squeeze-Treatment).

Die folgenden Beispiele sollen die Erfindung verdeutlichen.

### A Analytik:

a) Bestimmung des K-Wertes:
   Die K-Werte der wässrigen Natriumsalzlösungen der Copolymere wurden nach H. Fikentscher, Cellulose-Chemie, Band 13, 48-64 und 71-74 (1932) in wässriger Lösung bei einem pH-Wert von 7, einer Temperatur von 25°C und einer Polymerkonzentration des Natriumsalzes der Copolymere von 1 Gew.-% bestimmt.
b) Bestimmung des Feststoffgehaltes:
   Die Bestimmung erfolgt mit Hilfe des Analysegeräts MA30 der Firma Sartorius. Hierzu wird in eine Aluminiumschale eine definierte Menge der Probe (ca. 0,5 bis 1 g) eingewogen und bis zur Gewichtskonstanz bei 90°C getrocknet. Der prozentuale Feststoffgehalt (FG) errechnet sich wie folgt: FG = Auswaage x 100/Einwaage [Gew.-%].

### B Alkalisch initiierte Alkoxylierung von (Meth)Acrylamid

### Beispiel B1:

In einem 3,5 I Strahlreaktor mit Mantelkühlung, Oxiddosierung und Innenthermometer wurden 76.5 g Methacrylamid zusammen mit 205 g Dimethylformamid vorgelegt. Zu dieser Mischung wurden 4,35 g Kalium-tert.-butylat und 1,74 g eines Stabilisators, beispielsweise Phenothiazin, Hydrochinonmonomethylether, hinzugefügt.

Unter Magerluftatmosphäre (Stickstoff enthaltend 2 Vol.-% Sauerstoff) wurde auf 80°C erhitzt und bei einer Reaktionstemperatur von 80°C zunächst 50 g Ethylenoxid innerhalb von 15 Minuten bei einem Druck von 1,5 bar bis 2,5 bar zudosiert. Anschließend wurden 744,9 g Ethylenoxid bei einem Druck bis maximal 8 bar innerhalb von 3 Stunden zudosiert, wobei eine Reaktionstemperatur von 80°C bis 85°C nicht überschritten wurde. Das Reaktionsgemisch wurde über Nacht bei 80°C nachgerührt. Dabei stellte sich ein Enddruck von 2,46 bar ein. Anschließend wurde bei einer Temperatur von 80°C mit Stickstoff gespült. Der Reaktorinhalt wurde abgelassen und am Rotationsverdampfer bei maximal 120°C das eingesetzte Dimethylformamid abdestilliert.

Erhalten wurden 928 g Produkt mit einer Jodzahl nach Kaufmann von 7,8 g Jod/100g.

### Beispiel B2:

In einem 2 l Strahlreaktor mit Mantelkühlung, Oxiddosierung und Innenthermometer wurden 79,9 g Methacrylamid zusammen mit 215 g Dimethylformamid vorgelegt. Zu dieser Mischung wurden 4,54 g Kalium-tert.-butylat und 1,82 g eines Stabilisators, beispielsweise Phenothiazin, Hydrochinonmonomethylether, hinzugefügt.

Unter Magerluftatmosphäre (Stickstoff enthaltend 2 Vol.-% Sauerstoff) wurde auf 80°C erhitzt und bei einer maximalen Reaktionstemperatur von 80°C zunächst 50 g Ethylenoxid innerhalb von 15 Minuten bei einem Druck von 1,5 bar bis 2,5 bar zudosiert. Anschließend wurden 778,1 g Ethylenoxid bei einem Druck bis maximal 8 bar innerhalb von 5 Stunden zudosiert, wobei eine Reaktionstemperatur von 80°C bis 85°C nicht überschritten wurde. Danach wurde bei einer Temperatur von 80°C mit Stickstoff gespült. Der Reaktorinhalt wurde abgelassen und am Rotationsverdampfer bei maximal 120°C das eingesetzte Dimethylformamid abdestilliert.

Erhalten wurden 941 g Produkt mit einer Jodzahl nach Kaufmann von 8,0 g Jod/100g.

### C Polymerisationsverfahren

### Polymerisationsbeispiel 1:

In einen 1-I-Glasreaktor mit Ankerrührer, Thermometer, Stickstoff-Einleitung, Rückflusskühler und mehreren Zulaufgefäßen legte man 2 g phosphorige Säure und 180 g Wasser vor und erwärmte auf 98°C. Nach Erreichen dieser Temperatur wurden dann unter Einleiten von Stickstoff und unter Rühren die Zuläufe 1, 2 und 3 gleichzeitig beginnend kontinuierlich über einen Zeitraum von 4 Stunden mit gleichbleibender Zugaberate zudosiert. Zulauf 4 wird zeitgleich mit den Zuläufen 1, 2 und 3 mit gleich bleibender Zugaberate über einen Zeitraum von 5 Stunden zudosiert. Zur Vervollständigung der Polymerisation ließ man danach 1 Stunden bei 98°C nachpolymerisieren. Anschließend kühlte man das Reaktionsgemisch auf 60°C ab und tropfte 170,1 g 50 gew.-%ige Natronlauge zu, ohne die Temperatur von 60°C zu übersteigen.

Die erhaltene Polymerlösung war klar, hatte einen Feststoffgehalt von 47,5% und einen pH-Wert von 6,6. Der K-Wert (1 gew.-%ig in Wasser) lag bei 33,8.

| | | |
|---|---|---|
| Zulauf 1: | 148,8 g | Acrylsäure |
| Zulauf 2: | 226,2 g | Monomer aus Beispiel B1 |
| | 60 g | Wasser |
| Zulauf 3: | 3,8 g | Mercaptoethanol |
| | 60 g | Wasser |
| Zulauf 4: | 10,8 g | Natriumperoxodisulfat |
| | 75 g | Wasser |

### Polymerisationsbeispiel 2:

In einen 1-I-Glasreaktor mit Ankerrührer, Thermometer, Stickstoff-Einleitung, Rückflusskühler und mehreren Zulaufgefäßen legte man 1,4 g phosphorige Säure und 120 g Wasser vor und erwärmte auf 98°C. Nach Erreichen dieser Temperatur wurden dann unter Einleiten von Stickstoff und unter Rühren die Zuläufe 1, 2 und 3 gleichzeitig beginnend kontinuierlich über einen Zeitraum von 4 Stunden mit gleichbleibender Zugaberate zudosiert. Zulauf 4 wird zeitgleich mit den Zuläufen 1, 2 und 3 mit gleich bleibender Zugaberate über einen Zeitraum von 5 Stunden zudosiert. Zur Vervollständigung der Polymerisation ließ man danach 1 Stunden bei 98°C nachpolymerisieren. Anschließend kühlte man das Reaktionsgemisch auf 60°C ab und tropfte 110 g 50 gew.-%ige Natronlauge zu, ohne die Temperatur von 60°C zu übersteigen.

Die erhaltene Polymerlösung war klar, hatte einen Feststoffgehalt von 47,6% und einen pH-Wert von 6,7. Der K-Wert (1 gew.-%ig in Wasser) lag bei 45,9.

| | | |
|---|---|---|
| Zulauf 1: | 99,2 g | Acrylsäure |
| Zulauf 2: | 150,8 g | Monomer aus Beispiel B1 |
| | 40 g | Wasser |
| Zulauf 3: | 1,2 g | Mercaptoethanol |
| | 40 g | Wasser |
| Zulauf 4: | 7,2 g | Natriumperoxodisulfat |
| | 50 g | Wasser |

### Polymerisationsbeispiel 3:

In einen 1-I-Glasreaktor mit Ankerrührer, Thermometer, Stickstoff-Einleitung, Rückflusskühler und mehreren Zulaufgefäßen legte man 1,4 g phosphorige Säure und 120 g Wasser vor und erwärmte auf 98°C. Nach Erreichen dieser Temperatur wurden dann unter Einleiten von Stickstoff und unter Rühren die Zuläufe 1 und 2 gleichzeitig beginnend kontinuierlich über einen Zeitraum von 4 Stunden mit gleichbleibender Zugaberate zudosiert. Zulauf 4 wird zeitgleich mit den Zuläufen 1 und 2 mit gleich bleibender Zugaberate über einen Zeitraum von 5 Stunden zudosiert. Zur Vervollständigung der Polymerisation ließ man danach 1 Stunden bei 98°C nachpolymerisieren. Anschließend kühlte man das Reaktionsgemisch auf 60°C ab und tropfte 64,0 g 50 gew.-%ige Natronlauge zu, ohne die Temperatur von 60°C zu übersteigen.

Die erhaltene Polymerlösung war klar, hatte einen Feststoffgehalt von 48,6% und einen pH-Wert von 6,9. Der K-Wert (1 gew.-%ig in Wasser) lag bei 34,8.

| | | |
|---|---|---|
| Zulauf 1: | 56,6 g | Acrylsäure |
| Zulauf 2: | 193,4 g | Monomer aus Beispiel B2 |
| | 40 g | Wasser |
| Zulauf 3: | entfällt | |
| Zulauf 4: | 7,2 g | Natriumperoxodisulfat |
| | 90 g | Wasser |

### D Anwendungstechnische Prüfung der Copolymere aus den Polymerisationsbeispielen 1 bis 3

### Anwendungsbeispiele:

Die Beispiele werden unter den Bedingungen des Miller Fields in der Nordsee durchgeführt.

### Anwendungsbeispiel 1

In einem 250 ml Weithalsglas werden 100 ml Formationswasser vorgelegt und mit einem 3 cm langen Magnetrührstäbchen gerührt. Dieses Glas steht in einem Wasserbad mit Magnetrührung.

Zusammensetzung Formationswasser (Miller Field, Nordsee):

| | |
|---|---|
| 0,24 g | BaCl₂ x 2H₂O |
| 6,06 g | SrCl₂ x 6H₂O |
| 89,40 g | NaCl |
| 52,94 g | CaCl₂ x 2H₂O |
| 15,06 g | MgCl₂ x 6H₂O |

gelöst in einem Liter VE-Wasser

### Anwendungsbeispiel 2

In einen 100 ml Messkolben wird die zu untersuchende Menge an Copolymer eingewogen (unter Berücksichtigung des Feststoffgehaltes); aufgefüllt wird mit Meerwasser bis zur Eichmarke.

Zusammensetzung Meerwasser:

| | |
|---|---|
| 1,60 g | CaCl₂ x 2H₂O |
| 11,80 g | MgCl₂ x 6H₂O |
| 0,02 g | SrCl₂ x 6 H₂O |
| 0,80 g | KCl |
| 4,14 g | Na₂SO₄ |
| 0,20 g | NaHCO₃ |
| 24,80 g | NaCl |

gelöst in einem Liter VE-Wasser.

Der Messkolben wird im Wasserbad auf die Messtemperatur eingestellt.

### Anwendungsbeispiel 3

Haben die beiden Flüssigkeiten die gewünschte Temperatur von 80°C erreicht (Überprüfung mit Temperatursensor), kann mit der Fällung begonnen werden.

Die Zugabe des Meerwassers erfolgt durch Schütten. Der Vorgang dauert ca. 5 s. Die Beobachtungsdauer beträgt 50 min.

Folgende Einflussparameter auf die Fällung werden untersucht:
- Polymerkonzentration
- Polymere mit unterschiedlicher chemischer Zusammensetzung (jeweils als Salz)

Analytik während der Fällung:
- Transmissionsmessung:
   Die Transmission wird mit der Streulichtsonde "662 Photometer" der Firma Metrohm gemessen. Das transmittierte Licht wird quantitativ erfasst. Die Lichtquelle ist eine Wolframlampe (3.9 Watt). Die Messungen werden bei 450 nm durchgeführt.
- Temperaturmessung
   Die Temperaturmessung geschieht mittels Temperatursensor PT100. Die Messwerte werden über das pH-Meter der Firma Knick Calimac eingelesen.
- pH-Messung
   Die pH-Messung erfolgt mittels eines pH-Meters 765 der Firma Knick Calimac. pH-Elektrode: Aquatrode Plus; die Messwerte werden über das pH-Meter 765 der Firma Knick Calimac eingelesen.

Die Versuchsergebnisse der turbidimetrischen Messung sind in der folgenden Tabelle (%-Transmission nach 50min, Messungen bei 80°C) zusammengestellt. Zu Beginn der Messung, d.h. zur Zeit 0 Sekunden wiesen alle Proben eine Transmission von 100 % auf.

| | **Dosierung** | | | | | |
|---|---|---|---|---|---|---|
| | 0 ppm | 1 ppm | 5 ppm | 10 ppm | 20 ppm | 50 ppm |
| **Polymerisationsbeispiel A** | 8,9 | 23 | 79,3 | 99,8 | 99,8 | 99,9 |
| **Polymerisationsbeispiel B** | 8,9 | 9,9 | 57,1 | 93,7 | 99,5 | 99,5 |

Im Rahmen der vorliegenden Erfindung liegt eine Inhibierung der Fällung von Ca-/Ba-/ Sr-Kesselstein (Vermeidung von Ca-/Ba-/Sr-Kesselstein) bevorzugt dann vor, wenn nach 3000 Sekunden der Transmissionswert mindestens 50%, mehr bevorzugt mindestens 75%, weiter mehr bevorzugt mindestens 90%, weiter mehr bevorzugt mindestens 95%, insbesondere mindestens 98% beträgt.

## Patentansprüche

1. Copolymere erhältlich aus der radikalischen Copolymerisation von zumindest
(a) einer ethylenisch ungesättigten Carbonsäure mit 3 bis 6 C-Atomen oder deren Anhydrid
mit
(b) einem Reaktionsgemisch enthaltend zumindest eine Komponente der allgemeinen Strukturformel 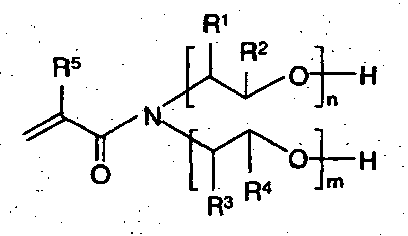
wobei R¹, R², R³, R⁴ unabhängig voneinander H oder C₁ bis C₄-Alkyl sind, n und m unabhängig voneinander eine ganze Zahl von 5 bis 50 sind und R⁵ H oder Methyl ist.

2. Copolymere nach Anspruch 1, wobei die monoethylenisch ungesättigte Carbonsäure Acrylsäure, Methacrylsäure und/oder Maleinsäureanhydrid ist.

3. Copolymere nach Anspruch 1 oder 2, wobei die in dem Reaktionsgemisch (b) enthaltene Komponente der allgemeinen Strukturformel durch eine alkalisch initiierte Alkoxylierung von Acrylamid und/oder Methacrylamid hergestellt ist.

4. Copolymere nach einem der Ansprüche 1 bis 3, wobei das Molverhältnis von (a) zu (b) 1:1 bis 15:1 beträgt.

5. Copolymere nach einem der Ansprüche 1 bis 4, wobei der K-Wert bevorzugt 10 bis 100 beträgt.

6. Copolymere nach einem der Ansprüche 1 bis 5, wobei bei der radikalischen Copolymerisation als weiteres Comonomer Vinylphosphonsäure eingesetzt wird.

7. Copolymer nach einem der Ansprüche 1 bis 6, wobei die radikalische Copolymerisation in Gegenwart eines auf einem Hypophosphit basierenden Reglers erfolgt ist.

8. Verfahren zur Herstellung von Copolymeren nach einem der Ansprüche 1 bis 7, enthaltend die Schritte:
i) Herstellung zumindest eines Reaktionsgemisches enthaltend zumindest eine Komponente der allgemeinen Strukturformel gemäß Anspruch 1 aus einer vorzugsweise alkalisch initiierten Alkoxylierung von Acrylamid und/oder Methacrylamid mittels zumindest eines Alkylenoxids, und
ii) Radikalische Copolymerisation von zumindest einem der in Schritt i) erhaltenen Reaktionsgemische mit zumindest einer monoethylenisch ungesättigten Carbonsäure mit 3 bis 6 C-Atomen oder deren Anhydrid.

9. Verfahren nach Anspruch 8, wobei in Verfahrensschritt i) das Alkylenoxid ausgewählt ist aus der Gruppe bestehend aus Ethylenoxid, Propylenoxid, Butylenoxid und einer Mischung davon.

10. Verfahren nach Anspruch 8 oder 9, wobei Verfahrensschritt i) in Gegenwart eines basischen Katalysators durchgeführt wird.

11. Verfahren nach Anspruch 10, wobei in Verfahrensschritt i) der basische Katalysator ausgewählt ist aus der Gruppe bestehend aus Alkali- und Erdalkalihydroxiden wie Natriumhydroxd, Kaliumhydroxid und Calciumhydroxid, Alkalimetall-alkoholaten insbesondere Natrium- und Kalium-C1-C4-alkoholaten, wie Natriummethylat, Natriumethylat und Kalium-tert.-butylat, Alkali- und Erdalkalimetallhydriden, wie Natriumhydrid und Calciumhydrid, und Alkalimetallcarbonaten, wie Natriumcarbonat und Kaliumcarbonat.

12. Verfahren nach Anspruch 10 oder 11, wobei der basische Katalysator in Verfahrensschritt i) in einer Menge von 0,05 bis 10 Gew.%, bevorzugt in einer Menge von 0,5 bis 2 Gew.-% bezogen auf die Gesamtmenge der Ausgangsstoffe eingesetzt wird.

13. Verfahren nach einem der Ansprüche 8 bis 12, wobei in Schritt ii) die radikalische Copolymerisation in Gegenwart eines Molekulargewichtsreglers durchführt wird.

14. Verfahren nach Anspruch 13, wobei in Schritt ii) der Molekulargewichtsregler in einer Menge von 0,05 bis 10 Gew.-% bezogen auf die Gesamtmenge der zu polymerisierenden Ausgangsstoffe eingesetzt wird.

15. Verfahren nach Anspruch 13 oder 14, wobei der Molekulargewichtsregler auf einem Hypophosphit basiert.

16. Verfahren nach einem der Ansprüche 8 bis 15, wobei in Schritt ii) bei der radikalischen Polymerisation als weiteres Comonomer Vinylphosphonsäure eingesetzt wird.

17. Verwendung der Copolymere nach einem der Ansprüche 1 bis 7, als Scale-Inhibitor.

18. Verwendung der Copolymere nach Anspruch 17 in Ölfeldanwendungen.

## Claims

1. A copolymer obtainable from the free radical copolymerization of at least
(a) an ethylenically unsaturated carboxylic acid having 3 to 6 carbon atoms or the anhydride thereof
with
(b) a reaction mixture comprising at least one component of the general structural formula 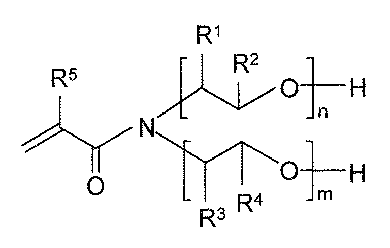 where R¹, R², R³, R⁴, independently of one another, are H or C₁- to C₄-alkyl, n and m, independently of one another, are an integer from 5 to 50 and R⁵ is H or methyl.

2. The copolymer according to claim 1, the monoethylenically unsaturated carboxylic acid being acrylic acid, methacrylic acid and/or maleic anhydride,

3. The copolymer according to claim 1 or 2, the component of the general structural formula which is present in the reaction mixture (b) being prepared by an alkali-initiated alkoxylation of acrylamide and/or methacrylamide.

4. The copolymer according to any of claims 1 to 3, the molar ratio of (a) to (b) being from 1:1 to 15:1.

5. The copolymer according to any of claims 1 to 4, with the K value preferably being from 10 to 100.

6. The copolymer according to any of claims 1 to 5, vinylphosphonic acid being used as a further comonomer in the free radical copolymerization.

7. The copolymer according to any of claims 1 to 6, the free radical copolymerization being effected in the presence of a regulator based on a hypophosphite.

8. A process for the preparation of copolymers according to any of claims 1 to 7, comprising the steps:
i) preparation of at least one reaction mixture comprising at least one component of the general structural formula according to claim 1 from a preferably alkali-initiated alkoxylation of acrylamide and/or methacrylamide by means of at least one alkylene oxide, and
ii) free radical copolymerization of at least one of the reaction mixtures obtained in step i) with at least one monoethylenically unsaturated carboxylic acid having 3 to 6 carbon atoms or the anhydride thereof.

9. The process according to claim 8, the alkylene oxide in process step i) being selected from the group consisting of ethylene oxide, propylene oxide, butylene oxide and a mixture thereof.

10. The process according to claim 8 or 9, process step i) being carried out in the presence of a basic catalyst.

11. The process according to claim 10, the basic catalyst in process step i) being selected from the group consisting of alkali metal and alkaline earth metal hydroxides, such as sodium hydroxide, potassium hydroxide and calcium hydroxide, alkali metal alcoholates, in particular sodium and potassium C₁-C₄-alcoholates, such as sodium methylate, sodium ethylate and potassium tert-butylate, alkali metal and alkaline earth metal hydrides, such as sodium hydride and calcium hydride, and alkali metal carbonates, such as sodium carbonate and potassium carbonate.

12. The process according to claim 10 or 11, the basic catalyst in process step i) being used in an amount of from 0.05 to 10% by weight, preferably in an amount of from 0.5 to 2% by weight, based on the total amount of the starting materials.

13. The process according to any of claims 8 to 12, the free radical copolymerization in step ii) being carried out in the presence of a molecular weight regulator.

14. The process according to claim 13, the molecular weight regulator in step ii) being used in an amount of from 0.05 to 10% by weight, based on the total amount of the starting materials to be polymerized.

15. The process according to claim 13 or 14, the molecular weight regulator being based on a hypophosphite.

16. The process according to any of claims 8 to 15, vinylphosphonic acid being used as a further comonomer in step ii) in the free radical polymerization.

17. The use of the copolymers according to any of claims 1 to 7 as a scale inhibitor.

18. The use of the copolymers according to claim 17 in oil field applications.

## Revendications

1. Copolymères pouvant être obtenus par la copolymérisation radicalaire d'au moins
(a) un acide carboxylique à insaturation éthylénique, ayant de 3 à 6 atomes de carbone ou son anhydride
et
(b) un mélange réactionnel contenant au moins un composant de formule développée générale 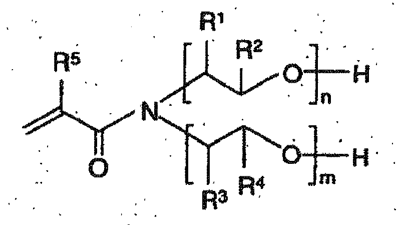 dans laquelle R¹, R², R³, R⁴ représentent, indépendamment les uns des autres, H ou un groupe alkyle en C₁-C₄, n et m représentent, indépendamment l'un de l'autre, un nombre entier valant de 5 à 50 et R⁵ est H ou le groupe méthyle.

2. Copolymères selon la revendication 1, dans lesquels l'acide carboxylique à insaturation monoéthylénique est l'acide acrylique, l'acide méthacrylique et/ou l'anhydride maléique.

3. Copolymères selon la revendication 1 ou 2, dans lesquels le composant de formule développée générale contenu dans le mélange réactionnel (b) est préparé par une alcoxylation d'acrylamide et/ou de méthacrylamide amorcée par un alcali.

4. Copolymères selon l'une quelconque des revendications 1 à 3, dans lesquels le rapport molaire de (a) à (b) vaut de 1:1 à 15:1.

5. Copolymères selon l'une quelconque des revendications 1 à 4, dans lesquels l'indice K vaut de préférence de 10 à 100.

6. Copolymères selon l'une quelconque des revendications 1 à 5, dans lesquels on utilise de l'acide vinylphosphonique comme autre comonomère dans la copolymérisation radicalaire.

7. Copolymère selon l'une quelconque des revendications 1 à 6, pour lequel la copolymérisation radicalaire est effectuée en présence d'un régulateur à base d'un hypophosphite.

8. Procédé pour la préparation de copolymères selon l'une quelconque des revendications 1 à 7, comportant les étapes :
i) préparation d'au moins un mélange réactionnel contenant au moins un composant de formule développée générale selon la revendication 1 obtenu par une alcoxylation, amorcée par un alcali, d'acrylamide et/ou de méthacrylamide au moyen d'au moins un oxyde d'alkylène, et
ii) copolymérisation radicalaire d'au moins l'un des mélanges réactionnels obtenus dans l'étape i) avec au moins un acide carboxylique à insaturation monoéthylénique, ayant de 3 à 6 atomes de carbone, ou son anhydride.

9. Procédé selon la revendication 8, dans lequel l'oxyde d'alkylène dans l'étape i) du procédé est choisi dans l'ensemble constitué par l'oxyde d'éthylène, l'oxyde de propylène, l'oxyde de butylène et un mélange de ceux-ci.

10. Procédé selon la revendication 8 ou 9, dans lequel l'étape i) du procédé est effectuée en présence d'un catalyseur basique.

11. Procédé selon l'étape 10, dans lequel le catalyseur basique dans l'étape i) du procédé est choisi dans le groupe constitué par des oxydes de métaux alcalins et alcalino-terreux, tels que l'hydroxyde de sodium, l'hydroxyde de potassium et l'hydroxyde de calcium, des alcoolates de métaux alcalins, en particulier des alcoolates en C₁-C₄ de sodium et de potassium, tels que le méthylate de sodium, l'éthylate de sodium et le tert-butylate de potassium, des hydrures de métaux alcalins et alcalino-terreux, tels que l'hydrure de sodium et l'hydrure de calcium, et des carbonates de métaux alcalins, tels que le carbonate de sodium et le carbonate de potassium.

12. Procédé selon la revendication 10 ou 11, dans lequel le catalyseur basique dans l'étape i) du procédé est utilisé en une quantité de 0,05 à 10 % en poids, de préférence en une quantité de 0,5 à 2 % en poids, par rapport à la quantité totale des produits de départ.

13. Procédé selon l'une quelconque des revendications 8 à 12, dans lequel la copolymérisation radicalaire dans l'étape ii) est effectuée en présence d'un régulateur de masse moléculaire.

14. Procédé selon la revendication 13, dans lequel le régulateur de masse moléculaire dans l'étape ii) est utilisé en une quantité de 0,05 à 10 % en poids, par rapport à la quantité totale des produits de départ à polymériser.

15. Procédé selon la revendication 13 ou 14, dans lequel le régulateur de masse moléculaire est à base d'un hypophosphite.

16. Procédé selon l'une quelconque des revendications 8 à 15, dans lequel comme autre comonomère dans la polymérisation radicalaire dans l'étape ii) on utilise de l'acide vinylphosphonique.

17. Utilisation des copolymères selon l'une quelconque des revendications 1 à 7, en tant qu'agent antitartre.

18. Utilisation des copolymères selon la revendication 17, dans des applications en champ pétrolifère.
